Europäisches Patentamt

European Patent Office

Office européen des brevets

(11) Publication number: **0 154 193**
**B1**

(12) **EUROPEAN PATENT SPECIFICATION**

(45) Date of publication of patent specification: **10.05.89**

(21) Application number: **85101335.9**

(22) Date of filing: **08.02.85**

(51) Int. Cl.⁴: **H 02 G 1/16**

(54) **A method of applying a hose section to a cable.**

(30) Priority: **08.02.84 DK 549/84**

(43) Date of publication of application:
**11.09.85 Bulletin 85/37**

(45) Publication of the grant of the patent:
**10.05.89 Bulletin 89/19**

(84) Designated Contracting States:
**BE CH DE FR GB IT LI NL SE**

(56) References cited:
**US-A-3 138 859**

**SOVIET INVENTIONS ILLUSTRATED, section
E1-X12, week 83/37, October 26, 1983
DERWENT PUBLICATIONS LTD., London, S 12**

(73) Proprietor: **NKT A/S
NKT Allé 1
DK-2605 Broendby (DK)**

(72) Inventor: **Nielsen, Ole Kjaer
Engvangsvej 8 Stroby Egede
DK-4600 Koge (DK)**

(74) Representative: **Abitz, Walter, Dr.-Ing. et al
Abitz, Morf, Gritschneder, Freiherr von
Wittgenstein Postfach 86 01 09
D-8000 München 86 (DE)**

Courier Press, Leamington Spa, England.

## Description

The invention concerns a method of applying a tight-fitting, elastic hose section to a cable, the hose section being expanded radially during its movement over the cable.

It will be appreciated that the expanded part of the hose section does not give rise to frictional force against the cable, as explained e.g. in DE—A—26 21 641. This prior art concerns a relatively rigid sleeve in particular, whose frictional force is reduced because of the radial expansion, but on the other hand sealing means are provided at the ends of the sleeve which cause increased frictional resistance against the cable in order for the pressurized air to be kept within the sleeve.

According to US—A—3 138 859 a hose or tube section is applied to a cable made up of a bundle of wires by expansion of the hose section radially during its movement over the cable by forcing one end of the hose section over the free end of the cable, and by closing the other end of the hose section, and then subjecting the hose section to fluid pressure. The latter art, which does not comprise sealing between the hose section and the cable does not lend itself to long hose sections, because relatively strong flow is required to reduce the friction sufficiently. This causes a large pressure drop and correspondingly large counter-pressure which renders the assembly difficult, as well as a risk of irregular radial expansion of the hose section. The latter drawbacks are remedied by means of an external support tube, but the large counter-pressure and fluid consumption as well as the presence of the support tube are a serious disadvantage in practice.

The invention as claimed in claim 1 solves the problem of how to eliminate friction between the hose section and the cable and to minimize the fluid consumption and counter-pressure. A ring to be used in connection with the method of claims 1 to 3 is defined by Claim 4.

The increased engagement force at one end of the hose section partly involves a well-defined positive pressure in the hose, which can thus be expanded to a cross section greater than that of the cable, and partly permits the enclosed fluid to escape at the said end of the hose section as the fluid is displaced from the cavity of the hose section by the cable. When the fluid escapes at said hose section end, it will ride of a fluis cushion so that there is practically no friction between the cable and the part of the hose section which has been given an increased resilient engagement force. It will be appreciated that this method also results in minimum counter-pressure and fluid consumption.

The resilient engagement force can e.g. be increased by application of a rubber band around one end of the hose section, but preferably the engagement force is increased by bending the outermost part of one end of the hose section backwardly over the hose section, thus obviating additional components. When the hose section has been slid in over the cable, the backwardly bent part is straightened so that a substantial part of the fluid escapes. In some cases, however, it is impossible to avoid the occurrence of fluid pockets between the hose section and the cable. Such pockets may cause undesirable electric discharges in high-voltage cables, but may be removed by relieving the fluid pressure by rolling an elastic ring across the hose section, the elastic engagement force of the ring against the cable being greater than the said increased engagement force. Such a ring or optionally several rings can moreover be utilized for clamping the ends of the hose section harder against the cable, e.g. to prevent ingress of water, and the use of a ring, which has a circular cross-section and consists wholly or partly of a semi-conductive material, provides the additional advantage in high-voltage cables that the semi-conductive ring, when given the same potential as the conductor of the cable, e.g, by a metallic connection between the ring and a cable lug, prevents concentration of the electric field around sharp edges on the electrically conductive parts when the ring is applied closely adjacent to the sharp edges.

Preferably, the hose section is made of silicon rubber, and the fluid is usually air. In a preferred embodiment the other end of the cable is closed by means of a plug having a through bore which communicates with a rubber ball provided with check valves, so that just a very simple and reliable aid is required in the mounting of the hose section.

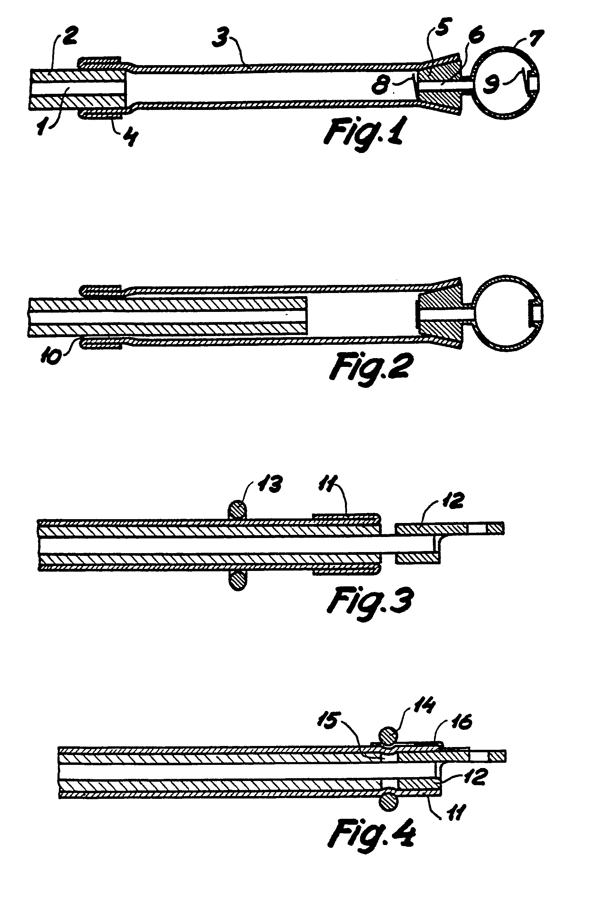

The invention will be explained more fully by the following description of a preferred embodiment with reference to the drawing, in which Figs. 1—4 show various stages in the application of the hose section in accordance with the method of the invention.

Fig. 1 shows a free end of a cable comprising an electric conductor 1 and an associated insulation 2. The figure moreover shows an elastic hose section 3, which is to be slid in over the cable by the method of the invention. The hose section 3 is shown in a position in which its one end is pulled in over the insulation 2 and bent backwardly at 4, while the other end of the hose section has mounted therein a plug 5 with a through tube 6 connected to a rubber ball 7 which contains check valves 8, 9. The latter parts are commercially available.

As shown in Fig. 1 the cross section dimension of the hose section in an unexpanded state is smaller than the cross sectional dimension of the cable so that the mounted hose section will be a tight fit around the cable. Pressurized air is then introduced into the hose section by means of the rubber ball 7, causing said hose section to expand to a cross sectional dimension which is larger than the cross sectional dimension of the cable (when the conductor consists of several twisted threads, a sealing substance may be applied bo⁻ the end to avoid ingress of air into the conductor). The backwardly bent part 4, however, brings about an increased engagement pressure against the cable, so that the air can escape through the backwardly bent part and the cable when the air pressure is sufficiently great in the hose section. When this is the case, it is not necessary to introduce more air into the hose section since this can readily be moved in over the cable as shown in Fig. 2.

Fig. 2 shows the hose section as slid partly in over the cable, some spacing between the cable and the internal wall of the hose section being clearly visible, so that no frictional force prevails at this location. When the hose section is moved over the cable it should be noted however that the cable displaces the cavity in the hose section so that pressure increases in the hose section. The expanded part of the hose section, however, will substantially maintain its cross sectional dimension because the excess of air escapes between the backwardly bent part 4 and the cable, which is indicated by a gap 10. Thus, the gap 10 causes the backwardly bent part of the hose section to ride on an air cushion when the hose section is moed in over the cable, so that there is practically no friction between the hose section and the cable.

In Fig. 3 the hose section has been moved into position over the cable, and the rubber ball and the plug have been removed. Excess hose section can be cut off and/or bent backwardly as shown at 11 in Fig. 3. This enables stripping of the cable and e.g. mounting of a cable lug 12 on the electric conductor. To enable a tight fit between the hose section and the surface of the cable it is necessary to expel air pockets, if any, between the hose section and the cable. This is done according to the invention by means of a ring 13, e.g. a strong O-ring, which is manually rolled down over the hose section placed on the cable. The resilient engagement force of the ring against the hose section is of course to overcome the pressure in the air pockets, so it will be appreciated that this results in effective venting of the pockets. Moreover, one or more such rings may be left on the hose section to prevent any ingress of water between this section and the cable.

It will be seen in Fig. 4 that the backwardly bent part 11 has been straightened and extends across the cable lug 12. However, it is observed that there is a small gap 15 between the insulation of the cable and the cable lug, which is normally necessary for the use of the tools used for clamping the cable lug. The positioning of a ring 14 adjacent this gap provides a more effective seal because the ring presses against the edges of the insulation and the cable lug, and the use of a ring consisting wholly or partly of a semi-conductive material in accordance with the invention provides the advantage that no concentrations of the electric field occur at the edge of the cable lug. This presupposes however that the ring 14 has the same potential as the conductor 1, which can e.g. be achieved by means of the electrically conductive strip 16 shown in Fig. 4.

It will thus be appreciated that the method of the invention allows insertion of practically any length of hose over the cable without noticeable friction. This can be obtained no matter whether the cable cross section is round, sector-shaped or of any other shape, and it is moreover possible to use a single hose type in connection with various cable thicknesses within a relatively large region. Finally, a cable end into which the hose section has been positioned by the method of the invention may be spliced to another cable end. When two cable ends have been spliced together, both ends of the hose section may be bent backwardly and pressurized air may be introduced between the cable insulation and one end of the hose, following which the hose section can be slid in over the splice.

## Claims

1. A method of applying a tight-fitting elastic hose section (3) to a cable comprising an electrical conductor (1), wherein the hose section is expanded radially during its movement over the cable (1 and 2) by forcing one end of the hose section (3) over the free end of the cable, and by closing the other end of the hose section (3), and then subjecting the hose section (3) to fluid pressure, characterized by applying the hose section (3) to a part of the cable having a smooth surface, preferably an associated cable insulation (2), and by giving said one end of the hose section (3) an increased elastic engagement force with respect to its ordinary engagement force against the cable (1 and 2) prior to subjecting the hose section (3) to fluid pressure, so that the fluid pressure provides a fluid cushion between the smooth cable surface and said one end of the hose section (3) which has been given the increased elastic engagement force.

2. A method according to claim 1, characterized by increasing the engagement force by bending the outermost part (at 4) of one end of the hose section (3) backwardly over the hose section.

3. A method according to claim 1 or 2, characterized by rolling an elastic ring (13) across the hose section (3), the elastic engagement force of the ring (13) against the cable (1 and 2) being greater than the said increased engagement force.

4. A ring to be used in connection with the method of claim 3, characterized in that the ring (14) has a circular cross section, that it consists wholly or part of a semi-conductive material and that its elastic engagement force against the cable (1 and 2) being greater than the said increased engagement force.

## Patentansprüche

1. Verfahren zum Aufbringen eines eng anliegenden elastischen Schlauchabschnittes (3) auf ein Kabel, das einen elektrischen Leiter (1) aufweist, wobei der Schlauchabschnitt während seiner Bewegung über das Kabel (1 und 2) radial augeweitet wird, indem ein Ende des Schlauchabschnitts (3) über das freie Ende des Kabels geschoben wird und das andere Ende des Schlauchabschnitts (3) geschlossen wird, und der Schlauchabschnitt (3) dann unter Fluiddruck gesetzt wird, dadurch gekennzeichnet, daß der Schlauchabschnitt (3) auf einen Teil des Kabels mit einer glatten Oberfläche aufgebracht wird, vorzugsweise eine zugehörige Kabelisolation (2), und daß dem einen Ende des Schlauchabschnitts (3) eine erhöhte elastische Anliegekraft im Vergleich zu seiner normalen Anliegekraft gegen das Kabel (1 und 2) erteilt wird, bevor der Schlauchabschnitt (3) Fluiddruck ausgesetzt wird, so daß der Fluiddruck ein Fluidkissen zwischen der glatten Kabeloberfläche und dem einen Ende des Schlauchabschnitts (3) schafft, dem die erhöhte elastische Anliegekraft erteilt wurde.

2. Verfahren nach Anspruch 1, dadurch gekennzeichnet, daß die Anliegekraft dadurcherhöht wird, daß der äußere Teil (bei 4) eines Endes des Schlauchabschnitts (3) über dem Schlauchabschnitt zurückgebogen wird.

3. Verfahren nach Anspruch 1 oder 2, dadurch gekennzeichnet, daß ein elastischer Ring (13) über den Schlauchabschnitt (3) gerollt wird, wobei die elastische Anliegekraft des Ringes (13) gegen das Kabel (1 und 2) größer ist als die erhöhte Anliegekraft.

4. Ring zur Verwendung in Verbindung mit dem Verfahren von Anspruch 3, dadurch gekennzeichnet, daß der Ring (14) einen kreisförmigen Querschnitt hat, daß er ganz oder teilweise aus halbleitendem Material besteht und daß die elastische Anliegekraft gegen das Kabel (1 und 2) größer ist als die erhöhte Anliegekraft.

**Revendications**

1. Procédé pour l'application d'une section de manchon élastique (3) à montage serré sur un câble comprenant un conducteur électrique (1), dans lequel la section de manchon est dilatée radialement pendant son déplacement sur le câble (1 et 2) en forçant une extrémité de la section de manchon (3) sur l'extrémité libre du câble, et en fermant l'autre extrémité de la section de manchon (3), puis en soumettant la section de manchon (3) à une pression de fluide, caractérisé en ce qu'on applique la section de manchon (3) à une partie du câble présentant une surface lisse, de préférence à un isolant (2) associé au câble, et on donne à ladite première extrémité de la section de manchon (3) une force d'engagement élastique accrue par rapport à sa force d'engagement habituelle contre le câble (1 et 2) avant de soumettre la section de manchon à la pression de fluide, de telle sorte que la pression de fluide définit un coussin de fluide entre la surface lisse du câble et ladite première extrémité de la section de manchon (3) à qui on a donné la force d'engagement élastique accrue.

2. Procédé selon la revendication 1, caractérisé en ce que l'on accroît la force d'engagement en pliant la partie la plus extrême (en 4) de la première extrémité de la section de manchon (3) vers l'arrière sur la section de manchon.

3. Procédé selon la revendication 1 ou 2, caractérisé en ce qu'on roule une bague élastique (13) le long de la section de manchon (3), la force d'engagement élastique de la bague (13) contre le câble (1 et 2) étant supérieure à ladite force d'engagement accrue.

4. Bague destinée à être utilisée en liaison avec le procédé de la revendication 3, caractérisée en ce que la bague (14) présente une section transversale circuliare, en ce qu'elle consiste entièrement ou en partie en un matériau semi-conducteur et en ce que sa force d'engagement élastique contre le câblre (1 et 2) est supérieure à ladite force d'engagement accrue.

Fig.1

Fig.2

Fig.3

Fig.4